(19) **Europäisches Patentamt**

**European Patent Office**

**Office européen des brevets**

(11) **EP 1 219 413 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(51) Int Cl.7: **B32B 27/36**, C08J 5/18, B29C 47/06, B65D 65/40, B32B 31/30 // C08L67:02

(21) Anmeldenummer: **01129257.0**

(22) Anmeldetag: **12.12.2001**

(54) **Einseitig matte, siegelfähige, biaxial orientierte Polyesterfolie**

Unilaterally mat, sealable, biaxially oriented polyester film

Feuille de polyester scellable, mate sur une face, à orientation biaxiale

(84) Benannte Vertragsstaaten:
**DE FR GB IT LU**

(30) Priorität: **20.12.2000 DE 10063590**

(43) Veröffentlichungstag der Anmeldung:
**03.07.2002 Patentblatt 2002/27**

(73) Patentinhaber: **Mitsubishi Polyester Film GmbH 65023 Wiesbaden (DE)**

(72) Erfinder:
- **Pfeiffer, Herbert, Professor Dr. 55126 Mainz (DE)**
- **Bartsch, Stefan, Dr. 65199 Wiesbaden (DE)**
- **Hilkert, Gottfried, Dr. 55291 Saulheim (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:

| | |
|---|---|
| EP-A- 0 035 835 | EP-A- 0 849 075 |
| EP-A- 0 945 258 | EP-A- 1 138 480 |
| WO-A-01/53080 | WO-A-01/60140 |
| WO-A-01/60608 | WO-A-01/60609 |
| WO-A-01/60610 | WO-A-01/60613 |
| WO-A-01/60900 | WO-A-97/37849 |
| GB-A- 2 344 596 | |

## Beschreibung

Die Erfindung betrifft eine einseitig matte, siegelfähige biaxial orientierte Polyesterfolie aus mindestens einer Basisschicht (B) und beidseitig auf dieser Basisschicht (B) aufgebrachten Deckschichten (A) und (C). Die Erfindung betrifft weiterhin ein Verfahren für die Herstellung der Folie und ihre Verwendung.

Siegelfähige, biaxial orientierte Polyesterfolien sind nach dem Stand der Technik bekannt.

In der **GB-A 1465 973** wird eine koextrudierte, zweischichtige Polyesterfolie beschneben, deren eine Schicht aus isophthalsäurehaltigen und terephthalsäurehaltigen Copolyestern und deren andere Schicht aus Polyethylenterephthalat besteht. Wegen fehlender Pigmentierung ist die Folie nicht prozesssicher herstellbar (die Folie ist nicht wickelbar) und nur unter Einschränkung weiterverarbeitbar.

In der **EP-A-0 035 835** wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite).

In der **EP-A-0 432 886** wird eine koextrudierte mehrschichtige Polyesterfolie beschrieben, die eine erste Oberfläche besitzt, auf der eine siegelfähige Schicht angeordnet ist, und eine zweite Oberfläche, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 μm dicke Siegelschicht wird eine Siegelnahtfestigkeit von 761,5 N/m (entsprechend 11,4 N/15 mm Folienbreite) angegeben. Nachteilig an der rückseitigen Acrylatbeschichtung ist, dass diese Seite gegen die siegelfähige Deckschicht nicht mehr siegelt. Die Folie ist damit nur sehr eingeschränkt zu verwenden.

In der **EP-A-0 515 096** wird eine koextrudierte, mehrschichtige, siegelfähige Polyesterfolie beschrieben, die auf der siegelfähigen Schicht ein zusätzliches Additiv enthält. Das Additiv kann z.B. anorganische Partikeln enthalten und wird vorzugsweise in einer wässrigen Schicht an die Folie bei deren Herstellung aufgetragen. Hierdurch soll die Folie die guten Siegeleigenschaften beibehalten und gut zu verarbeiten sein. Die Rückseite der Folie enthält nur sehr wenige Partikeln, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (entsprechend 3 N/15 mm Folienbreite). Für eine 3 mm dicke Siegelschicht wird eine Siegelnahtfestigkeit von 275 N/m (entsprechend 4,1 N/15 mm Folienbreite) angegeben.

In der **WO 98/06575** wird eine koextrudierte, mehrschichtige Polyesterfolie beschrieben, die eine siegelfähige Deckschicht und eine nicht siegelfähige Basisschicht enthält. Die Basisschicht kann dabei aus einer oder aus mehreren Schichten aufgebaut sein, wobei eine der Schichten mit der siegelfähigen Schicht in Kontakt ist. Die andere (äußere) Schicht bildet dann die zweite, nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einer Menge von 0,1 bis 10 Gew.-% zugegeben wird. Die Basisschicht dieser Folie ist mit üblichen Antiblockmitteln ausgestattet. Je nach Ausführungsform kann die Folie auch ein mattes Aussehen aufweisen. Die Folie zeichnet sich durch eine gute Siegelfähigkeit aus, hat jedoch nicht das gewünschte Verarbeitungsverhalten und weist Defizite in den optischen Eigenschaften (Glanz und Trübung) auf.

Ebenfalls bekannt sind nach dem Stand der Technik matte, milchig erscheinende, biaxial orientierte Polyesterfolien.

In der **DE-A 23 53 347** wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr eingesetzt werden kann, da ansonsten die Folie gelb wird. Das Verfahren ist damit aber unwirtschaftlich und die mit Regenerat produzierte, verfärbte Folie konnte sich am Markt nicht durchsetzen. Bei Erhöhung der Konzentration des Mischpoylemeren im Polyester verliert die Folie im Allgemeinen ihren milchigen Charakter und wird weiß mit hoher Opazität.

Aufgabe der vorliegenden Erfindung war es, eine einseitig matte, siegelfähige, biaxial orientierte Polyesterfolie bereitzustellen, die nicht die Nachteile der genannten Folien nach dem Stand der Technik aufweist und sich insbesondere durch hervorragende optische Eigenschaften (hoher einseitiger Mattgrad bei gleichzeitig guter Transparenz), einer sehr guten Siegelfähigkeit und einer verbesserten Verarbeitbarkeit auszeichnet. Außerdem soll sich die Folie auch auf schnelllaufenden Verarbeitungsmaschinen störungsfrei und betriebssicher verarbeiten lassen. Bei der Herstellung der Folie soll weiterhin gewährleistet sein, dass bei der Folienherstellung im Betrieb anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einer einseitig matten, siegelfähigen, biaxial orientierten und koextrudierten Polyesterfolie mit mindestens einer Basisschicht (B), mit einer siegelfähigen Deckschicht (A) und mit einer matten Deckschicht (C) gelöst, wobei die Folie durch die folgenden Merkmale gekennzeichnet ist,

a) die siegelfähige Deckschicht (A) weist eine Siegelanspringtemperatur von höchstens 120 °C, eine Siegelnahtfestigkeit von mindestens 1,0 N/15 mm Folienbreite, einen $R_a$-Wert von höchstens 100 nm und einen Messwert der Oberflächengasströmung im Bereich von 20 bis 4000 s auf

b) die matte Deckschicht (C) weist einen Glanz von höchstens 100, einen $R_a$-Wert von mindestens 150 nm und einen Messwert der Oberflächengasströmung im Bereich von 0 bis 50 s auf

c) die Trübung ist kleiner als 50 %.

Die Unteransprüche geben bevorzugte Ausführungsformen der Erfindung an, die nachstehend näher erläutert werden.

Erfindungsgemäß ist die Folie zumindest dreischichtig und umfasst dann als Schichten die Basisschicht (B), die siegelfähige Deckschicht (A) und die nicht siegelfähige Deckschicht (C).

Die Basisschicht (B) der Folie enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht (A) oder in der Schicht (C) vorkommen können.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Koextrusion auf die Basisschicht (B) aufgebrachte siegelfähige Deckschicht (A) ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Die gewünschten Siegel- und die gewünschten Verarbeitungseigenschaften der erfindungsgemäßen Folie werden aus der Kombination der Eigenschaften des verwendeten Copolyesters für die siegelfähige Deckschicht (A) und den Oberflächentopographien sowohl der siegelfähigen Deckschicht (A) wie auch der matten Deckschicht (C) erhalten.

Die gewünschte Siegelanspringtemperatur von 120 °C und die Siegelnahtfestigkeit von mindestens 1,0 N/15mm Folienbreite wird erreicht, wenn für die siegelfähige Deckschicht (A) die oben näher beschriebenen Copolymeren verwendet werden. Zur Erzielung des gewünschten Handlings und zur Erzielung der guten Verarbeitungseigenschaften wird die siegelfähige Deckschicht (A) weiter modifiziert.

Dies geschieht in einer besonders günstigen Ausführungsform mit Hilfe von geeigneten Antiblockmitteln einer ausgewählten Größe, die der Siegelschicht in einer bestimmten Menge zugegeben werden und zwar derart, dass einerseits das Verblocken der Folie minimiert und andererseits die Siegeleigenschaften nur unwesentlich verschlechtert werden. Die Antiblockmittel für die siegelfähige Deckschicht (A) sind prinzipiell die gleichen wie diejenigen für die matte Deckschicht (C). Im Vergleich zur matten Deckschicht (C) ist aber bei der siegelfähigen Deckschicht (A) die Menge an Antiblockmittel weitaus geringer. Zur Erzielung der vorgenannten Eigenschaften beträgt in der siegelfähigen Deckschicht (A) die Menge an Antiblockmittel 0,01 bis 1 Gew.-%, bevorzugt 0,015 bis 0,08 Gew.-%, und in der besonders bevorzugten Ausführungsform 0,02 bis 0,08 Gew.-%. Die gewünschten Eigenschaftskombinationen lassen sich insbesondere dann erreichen, wenn die Topographie der siegelfähigen Deckschicht (A) durch die folgenden Parameter beschrieben wird:

Die Rauigkeit der siegelfähigen Deckschicht, ausgedrückt durch ihren $R_a$-Wert, soll kleiner/gleich 60 nm sein. Im anderen Fall werden die Siegeleigenschaften im Sinne der vorliegenden Erfindung negativ beeinflusst. Der Messwert der Oberflächengasströmung soll erfindungsgemäß im Bereich von 20 bis 4000 s liegen. Bei Werten unterhalb von 20 s werden die Siegeleigenschaften im Sinne der vorliegenden Erfindung negativ beeinflusst, während sich bei Werten oberhalb von 4000 s das Handling der Folie deutlich verschlechtert.

In einer günstigen Ausführungsform beträgt der Reibungskoeffizient der siegelfähigen Deckschicht (A) gegen sich selbst höchstens 1,0 und in einer besonders günstigen Ausführungsform höchstens 0,8. In der besonders günstigen Ausführungsform ist das Handling und das Verarbeitungsverhalten der Folie besonders gut.

Zur Erzielung der gewünschten Mattheit/des gewünschten Mattgrades enthält die Deckschicht (C) Partikeln (auch als Additive oder Pigmente bezeichnet) in einer wirksamen Menge von 0,5 bis 20 Gew.-%, bezogen auf das Gesamtgewicht der Deckschicht (C). In der bevorzugten Ausführungsform der Folie gemäß der vorliegenden Erfindung beträgt die Partikelkonzentration 1,0 bis 18 Gew.-% und in der besonders bevorzugten Ausführungsform 1,5 bis 16 Gew.-%.

Typische, den Mattgrad der Folie begünstigende Partikeln, sind anorganische und/oder organische Partikeln, beispielsweise Calciumcarbonat, amorphe Kieselsäure, Talk, Magnesiumcarbonat, Banumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Daneben können auch Mischungen von zwei und mehreren verschiedenen Partikelsystemen oder Mischungen von Partikelsystemen in gleicher chemischer Zusammensetzung, aber unterschiedlicher Partikelgröße gewählt werden. Die Partikeln können den Polymeren der einzelnen Schichten der Folie in den jeweils vorteilhaften Konzentrationen, z.B. als glykolische Dispersion während der Polykondensation oder über Masterbatche bei der Extrusion zugegeben werden.

Bevorzugte Partikeln sind $SiO_2$ in kolloidaler und in kettenartiger Form. Diese Partikeln werden sehr gut in die Polymermatrix eingebunden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Partikeldurchmesser (in der Regel der $d_{50}$-Wert) von größer als 1 µm, bevorzugt im Bereich von 1,5 bis 10 µm und besonders bevorzugt im Bereich von 2 bis 8 µm zu verwenden.

Die Pigmentierung der einzelnen Schichten kann danach sehr verschieden sein und richtet sich im Wesentlichen nach dem Folienaufbau (Schichtaufbau) und den Anforderungen der Folie hinsichtlich Erzielung der weiteren optischen Eigenschaften und dem Herstellungs- und Verarbeitungsverhalten.

In einer weiteren günstigen Ausführungsform enthält die Deckschicht (C) neben dem Polyethylenterephthalat-Homopolymer oder Polyethylenterephthalat Copolymer eine weitere polymere Komponente I. Diese Komponente I ist ein Polyethylenterephthalat-Copolymer, welches aus dem Kondensationsprodukt der folgenden Monomeren bzw. deren zur Bildung von Polyestern befähigten Derivaten besteht:

a) 40 bis 99 Mol-% Isophthalsäure;
b) 0 bis 60 Mol-% wenigstens einer aliphatischen Dicarbonsäure mit der Formel $HOOC(CH_2)_n COOH$, wobei n im

Bereich von 1 bis 11 liegt;

c) 1 bis 15 Mol-% wenigstens eines Sulfomonomeren enthaltend eine Alkalimetallsulfonatgruppe an dem aromatischen Teil einer Dicarbonsäure;

d) die zur Bildung von 100 Mol-% Kondensat notwendige stöchiometnsche Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente I bildenden Monomeren. Zur ausführlichen Beschreibung der Komponente I siehe auch die **EP-A-0 144 878,** auf die hier ausdrücklich Bezug genommen wird.

Die Komponente I wird zweckmäßiger Weise als eine weitere polymere Komponente der matten Deckschicht (C) zugefügt, wobei der Gewichtsanteil bis zu 60 Gew.-% ausmachen kann. Die Komponente I bildet in diesem Fall mit den anderen in dieser Schicht vorhandenen Polymeren ein Blend oder eine Mischung oder aber auch ein Copolymeres durch Umesterung in der Extrusion.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die Komponente I und das entsprechend andere Polymere für die Deckschicht C jeweils für sich getrennt dem Extruder für die Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die gewünschten Eigenschaftskombinationen lassen sich insbesondere dann erreichen, wenn die Topographie der matt scheinenden Deckschicht (C) durch den folgenden Satz von Parametern beschrieben wird:

a) die Rauigkeit der Folie, ausgedrückt als ihr $R_a$-Wert, liegt im Bereich von 150 bis 1000 nm, bevorzugt 175 bis 950 nm und besonders bevorzugt 200 bis 900 nm. Kleinere Werte als 150 nm haben negative Auswirkungen auf den Mattheitsgrad der Oberfläche, größere Werte als 1000 nm beeinträchtigen die optischen Eigenschaften der Folie.

b) Der Messwert der Oberflächengasströmung liegt im Bereich 0 bis 80 s, bevorzugt im Bereich von 1 bis 50 s. Bei Werten oberhalb von 80 s wird der Mattheitsgrad der Folie negativ beeinflusst.

Die Basisschicht (B) kann ebenfalls zusätzlich übliche Additive, wie beispielsweise Stabilisatoren und/oder Pigmente (= Füller) enthalten. Als Stabilisatoren werden vorteilhaft beispielsweise Phosphorverbindungen, wie Phosphorsäure oder Phosphorsäureester, eingesetzt.

Typische Pigmente (= Füller) für die Basisschicht sind die für die beiden Deckschichten angegebenen anorganischen und/oder organischen Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

In der vorteilhaften Verwendungsform besteht die Folie aus drei Schichten, der Basisschicht (B) und beidseitig auf dieser Basisschicht aufgebrachten Deckschichten (A) und (C), wobei die Deckschicht (A) gegen sich selbst und gegen die Deckschicht (C) siegelfähig ist.

Zwischen derBasisschicht (B) und den Deckschichten (A) und (C) kann sich gegebenenfalls noch eine Zwischenschicht befinden. Diese kann wiederum aus den für die Basisschicht oder den Deckschichten (A) und (C) beschriebenen Polymeren bestehen. In einer besonders bevorzugten Ausführungsform besteht die Zwischenschicht aus dem für die Basisschicht verwendeten Polyester. Die Zwischenschicht kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der besonders vorteilhaften dreischichtigen Ausführungsform der erfindungsgemäßen Folie liegt die Dicke der Deckschichten (A) und (C) im allgemeinen im Bereich von 0,1 bis 5,0 mm, bevorzugt im Bereich von 0,2 bis 4,5 mm und besonders bevorzugt im Bereich von 0,3 bis 4,0 mm, wobei die Deckschichten (A) und (C) gleich oder verschieden dick sein können.

Die Gesamtdicke der erfindungsgemäßen Polyesterfolie kann innerhalb bestimmter Grenzen variieren. Sie beträgt 3 bis 350 µm, insbesondere 4 bis 300 µm, vorzugsweise 5 bis 250 µm, wobei die Basisschicht (B) einen Anteil von vorzugsweise 5 bis 95 % an der Gesamtdicke hat.

Die Polymeren für die Basisschicht (B) und die beiden Deckschichten (A) und (C) werden zur Herstellung der Folie drei Extrudern zugeführt. Etwa vorhandene Fremdkörper oder Verunreinigungen lassen sich aus der Polymerschmelze vor/in derExtrusion durch geeignete Filter entfernen. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Erfindung betrifft auch ein Verfahren zur Herstellung der erfindungsgemäßen Polyesterfolie nach dem an sich aus der Literatur bekannten Koextrusionsverfahren.

Im Rahmen dieses Verfahrens wird so vorgegangen, dass die den einzelnen Schichten (A), (B) und (C) der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Zunächst wird wie beim Koextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Das biaxiale Strecken wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die in-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit einerseits guten Siegeleigenschaften und andererseits vergleichsweise geringen Trübung, hat es sich als günstig erwiesen, wenn die planare Orientierung Δp der Folie kleiner ist als Δp = 0,170, bevorzugt kleiner ist als Δp = 0,168 und ganz bevorzugt kleiner ist als Δp = 0,166. In diesem Fall ist die Festigkeit der Folie in Dickenrichtung so groß, dass bei der Messung der Siegelnahtfestigkeit definitiv die Siegelnaht aufgetrennt wird und die Folie nicht einreisst und weiterreisst. Außerdem ist dann die Bildung von Trübung initiierenden Vakuolen um die jeweiligen Partikeln herum, weniger ausgeprägt vorhanden.

Es hat sich herausgestellt, dass die wesentlichen Einflussgrößen auf die planare Orientierung Δp die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von Δp = 0,172 mit dem Parametersatz $\lambda_{MD}$ = 4,8 und $\lambda_{TD}$ = 4,0 , die Strecktemperaturen in Längs- und in Querrichtung $T_{MD}$ = 80 bis 118 °C und $T_{TD}$ = 80 bis 125 °C, so erhält man durch Erhöhung der Längsstrecktemperatur auf $T_{MD}$ = 80 bis 125 °C oder durch Erhöhung der Querstrecktemperatur auf $T_{TD}$ = 80 bis 135 °C oder durch Absenkung des Längsstreckverhältnisses auf $\lambda_{MD}$ = 4,3 oder durch Absenkung des Querstreckverhältnisses auf $\lambda_{TD}$ = 3,7 eine planare Orientierung Δp, die im gewünschten Bereich liegt. Die Folienbahngeschwindigkeit betrug hierbei 340 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschntt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird dabei so eingestellt, dass im Ergebnis eine Oberflächenspannung im Bereich von über 45 mN/m resultiert.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen vor dem Streckschritt in Querrichtung auf die Folie aufzubringen.

Die erfindungsgemäße einseitig matte, siegelfähige Folie zeichnet sich durch eine hervorragende Siegelfähigkeit, eine ansprechende Optik, ein sehr gutes Handling und durch ein sehr gutes Verarbeitungsverhalten aus. Bei der Folie siegelt die siegelfähige Deckschicht (A) nicht nur gegen sich selbst (fin sealing), sondern auch gegen die matte Deckschicht (C) (lab sealing).

Außerdem besticht die Folie durch eine werbewirksame, matte Oberfläche A, ohne dass sich dabei die Trübung der Folie deutlich verschlechtert (erhöht) hat. Daneben ist bei der Herstellung der Folie gewährleistet, dass das Verschnittmaterial (Regenerat) in einer Menge im Bereich von 10 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere ihr optisches Erscheinungsbild.

Die Folie eignet sich demnach ganz hervorragend für den Einsatz in der flexiblen Verpackung und zwar insbesondere dort, wo ihre hervorragenden Siegeleigenschaften und ihre gute Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

## Tabelle 1

| | erfindungsgemäßer Bereich | bevorzugt | besonders bevorzugt | Einheit | Messmethode |
|---|---|---|---|---|---|
| **DECKSCHICHT A** | | | | | |
| Siegelanspringtemperatur | < 120 | < 115 | < 110 | °C | intern |
| Siegelnahtfestigkeit | > 1,0 | > 1,2 | > 1,4 | N/15 mm | intern |
| Mittlere Rauigkeit R$_a$ | ≤ 100 | ≤ 90 | ≤ 80 | nm | DIN 4768, Cut-off von 0,25 mm |
| Messwertbereich für die Ofl.-Gasströmung | 20-4000 | 50-3500 | 60-3000 | sec | intern |
| Glanz, 60° | > 100 | > 110 | > 120 | | DIN 67530 |
| **DECKSCHICHT C** | | | | | |
| Glanz, 60° | < 100 | < 90 | < 80 | | DIN 67530 |
| Mittlere Rauigkeit R$_a$ | 150 bis 1000 | 175 bis 950 | 200 bis 900 | nm | DIN 4768, Cut-off von 0,25 mm |
| Messwertbereich für die Ofl.-Gasströmung | ≤ 80 | 1-50 | 2-30 | sec | intern |
| COF | < 0,6 | < 0,45 | < 0,40 | | DIN 53375 |
| **weitere Folieneigenschaften** | | | | | |
| Trübung | < 50 | < 45 | < 40 | % | ASTM-D 1003-52 |
| Planare Orientierung Δp | < 0,170 | < 0,168 | < 0,166 | | intern |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV \text{ (DCE)} = 6,907 \times 10^{-4} \text{ SV (DCE)} + 0,063096.$$

**Bestimmung der Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 4 bar und einer Siegeldauer von 0,5 s gesiegelt wird. Aus den gesiegelten Proben werden Prüfstreifen von 15 mm Breite geschnitten. Die T-Siegelnahtfestigkeit wird wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Reibung (COF)**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss zusammen mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.
Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

| Messbedingungen: | |
| --- | --- |
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung △p**

Die Bestimmung der planaren Orientierung erfolgt über die Messung der Brechungsindizes mit dem Abbe-Refraktometer nach der internen Betriebsvorschnft 24.

| Probenvorbereitung: | |
| --- | --- |
| Probengröße und Probenlänge | 60 bis 100 mm |
| Probenbreite | entspricht Prismenbreite von 10 mm |

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_a$ (=$n_z$) muss die zu messende Probe aus der Folie ausgeschnitten werden, bei der die Laufkannte der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickennchtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (= $n_z$) der anderen Oberflächenseite gemessen und in eine entsprechende Tabelle emgetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt.

Ebenfalls wurden Chips aus Polyethylenterephthalat und einem Füllstoff dem Extruder für die matt scheinende Deckschicht (C) zugeführt.

Daneben wurden Chips aus einem linearen Polyester hergestellt, der aus einem amorphen Copolyester (im folgenden mit Copolyester I bezeichnet) mit 78 Mol.-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester I wurde bei einer Temperatur von 100 °C auf eine Restfeuchte von unterhalb 200 ppm getrocknet und dem Extruder für die siegelfähige Deckschicht (A) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 μm hergestellt. Die Dicke der jeweiligen Deckschichten ist der Tabelle 2 zu entnehmen.

Deckschicht (A), Mischung aus:

| | |
|---|---|
| 96,0 Gew.-% | Copolyester mit einem SV-Wert von 800 |
| 4,0 Gew.-% | Masterbatch aus 97,75 Gew.-% Copolyester I und 1,0 Gew.-% ®Sylobloc 44 H (synthetisches SiO$_2$ der Fa. Grace) und 1,25 Gew.-% ®Aerosil TT 600 (pyrogenes SiO$_2$ der Fa. Degussa) |

Basisschicht (B):

| | |
|---|---|
| 100,0 Gew.-% | Polyethylenterephthalat mit einem SV-Wert von 800 |

Deckschicht (C), Mischung aus:

| | |
|---|---|
| 40 Gew.-% | Polyethylenterephthalat mit einem SV-Wert von 800 |
| 60 Gew.-% | Masterbatch aus 95 Gew.-% Polyethylenterephthalat und 5,0 Gew.-% Kieselsäurepartikel (®Sylobloc 44 der Firma Grace) mit einer mittleren Teilchengröße von 4,5 μm. |

Die Herstellungsbedingungen in den einzelnen Verfahrensschritten waren:

| Extrusion | Temperaturen | A-Schicht: | 270 | °C |
|---|---|---|---|---|
| | | B-Schicht: | 290 | °C |
| | | C-Schicht: | 290 | °C |
| | Düsenspaltweite: | | 2,5 | mm |
| | Temperatur der Abzugswalze | | 30 | °C |
| Längsstreckung | Temperatur: | | 80-126 | °C |
| | Längsstreckverhältnis: | | 4,0 | |
| Querstreckung | Temperatur: | | 80-135 | °C |
| | Querstreckverhältnis | | 4,0 | |
| Fixierung | Temperatur: | | 230 | °C |
| | Dauer: | | 3 | s |

Die Folie hatte den geforderten niedrigen Glanz, die niedrige Trübung und die guten Siegeleigenschaften.

Weiterhin zeigt die Folie das gewünschte Handling und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Schichtdicke der siegelfähigen Deckschicht (A) von 1,5 auf 2,0 µm bei sonst identischem Folienaufbau und identischer Herstellungsweise angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde jetzt eine 23 µm dicke Folie produziert. Die Schichtdicke der siegelfähigen Deckschicht (A) betrug 2,5 µm und diejenige der nicht siegelfähigen Deckschicht (C) betrug 2,0 µm. Hierdurch konnte der Glanz der Folie weiter herabgesenkt werden, die Siegeleigenschaften nochmals verbessert, insbesondere ist die Siegelnahtfestigkeit nochmals deutlich erhöht werden. Das Handling der Folie hat sich dabei tendenziell auch noch verbessert.

**Beispiel 4**

Im Vergleich zu Beispiel 3 wurde das Copolymere für die siegelfähige Deckschicht (A) geändert. Anstelle des amorphen Copolyesters mit 78 Mol-% Polyethylenterephthalat und 22 Mol-% Ethylenisophthalat wurde jetzt ein amorpher Copolyester mit 70 Mol-% Polyethylenterephthalat und 30 Mol-% Ethylenisophthalat verwendet. Der Rohstoff wurde auf einem Zweischneckenextruder mit Entgasung verarbeitet, ohne dass er vorgetrocknet werden musste. Die Schichtdicke der siegelfähigen Deckschicht (A) betrug wiederum 2,5 µm und diejenige der nicht siegelfähigen Schicht (C) betrug 2,0 µm. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in der siegelfähigen Deckschicht (A) leicht angehoben.

**Beispiel 5**

Im Vergleich zu Beispiel 3 wurde die Zusammensetzung für die matt scheinende Deckschicht (C) geändert. Anstelle des Polyethylenterephthalat mit einem SV-Wert von 800 wurden jetzt 20 Gew.-% der polymeren Komponente I der matt scheinenden Deckschicht (C) dazugegeben. Die Komponente I setzt sich dabei wie folgt zusammen:

a) 90 Mol-% Isophthalsäure;
b) 10 Mol-% Na-Salz der Sulfoisophthalsäure

Durch die Zuführung der Komponente I in die matte Deckschicht wurde die Trübung der Folie und die Siegelung der Seite (A) gegen die Seite (C) weiter verbessert.

Deckschicht (C), Mischung aus:

| 20 | Gew.-% | Polyethylenterephthalat mit einem SV-Wert von 800 |
|----|--------|----|
| 20 | Gew.-% | Komponente I |
| 60 | Gew.-% | Masterbatch aus 95 Gew.-% Polyethylenterephthalat und 5,0 Gew.-% Kieselsäurepartikel (®Sylobloc 44 der Firma Grace) mit einer mittleren Teilchengröße von 4,5 µm. |

**Vergleichsbeispiel 1**

Im Vergleich zu Beispiel 1 wurde jetzt die siegelfähige Deckschicht (A) nicht pigmentiert. Die Siegeleigenschaften haben sich zwar hierdurch etwas verbessert, jedoch ist das Handling der Folie und das Verarbeitungsverhalten inakzeptabel schlechter geworden.

**Vergleichsbeispiel 2**

Im Vergleich zu Beispiel 1 wurde jetzt die siegelfähige Deckschicht (A) so hoch pigmentiert wie die nicht siegelfähige Deckschicht (C). Das Handling und die Verarbeitungseigenschaften der Folie haben sich durch diese Maßnahme verbessert, jedoch sind die Siegeleigenschaften deutlich schlechter geworden.

**Vergleichsbeispiel 3**

Im Vergleich zu Beispiel 1 wurde jetzt die nicht siegelfähige Deckschicht (C) deutlich weniger pigmentiert. Das Handling der Folie und das Verarbeitungsverhalten der Folie ist deutlich schlechter geworden.

**Vergleichsbeispiel 4**

Es wurde Beispiel 1 aus der EP-A-0 035 835 nachgearbeitet. Das Siegelverhalten der Folie, das Handling der Folie und das Verarbeitungsverhalten der Folie ist schlechter als bei den erfindungsgemäßen Beispielen.

**Tabelle 2**

| Beispiel | Folien-dicke µm | Folien-aufbau | Schichtdicken µm | | | Pigmente in den Schichten | | | mittlerer Pigment-Durchmesser in Schichten µm | | | Pigmentkonzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylobloc 44 H<br>Aerosil TT 600 | kein | Sylobloc 44 | 2,5<br>0,04 | | 4,5 | 300<br>375 | 0 | 30000 |
| B 2 | 12 | ABC | 2,0 | 8,5 | 1,5 | Sylobloc 44 H<br>Aerosil TT 600 | kein | Sylobloc 44 | 2,5<br>0,04 | | 4,5 | 300<br>375 | 0 | 30000 |
| B 3 | 23 | ABC | 2,5 | 18,5 | 2,0 | Sylobloc 44 H<br>Aerosil TT 600 | kein | Sylobloc 44 | 2,5<br>0,04 | | 4,5 | 300<br>375 | 0 | 30000 |
| B 4 | 23 | ABC | 2,5 | 18,5 | 2,0 | Sylobloc 44 H<br>Aerosil TT 600 | kein | Sylobloc 44 | 2,5<br>0,04 | | 4,5 | 400<br>500 | 0 | 30000 |
| B5 | 23 | ABC | 2,5 | 18,5 | 2,0 | Sylobloc 44 H<br>Aerosil TT 600 | kein | Sylobloc 44 | 2,5<br>0,04 | | 4,5 | 400<br>500 | 0 | 30000 |
| VB 1 | 12 | ABC | 1,5 | 9 | 1,5 | kein | kein | Sylobloc 44 H<br>Aerosil TT 600 | | | 2,5<br>0,04 | | 0 | 1200<br>1500 |
| VB 2 | 12 | ABC | 1,5 | 9 | 1,5 | Sylobloc 44 H<br>Aerosil TT 600 | kein | Sylobloc 44 H<br>Aerosil TT 600 | 2,5<br>0,04 | | 2,5<br>0,04 | 300<br>375 | 0 | 1200<br>1500 |
| VB 3 | 12 | ABC | 1,5 | 9 | 1,5 | Sylobloc 44 H<br>Aerosil TT 600 | kein | Sylobloc 44 H<br>Aerosil TT 600 | 2,5<br>0,04 | | 2,5<br>0,04 | 300<br>375 | 0 | 600<br>750 |
| VB 4 | 15 | AB | 2,25 | 12,75 | | Gasil 35 | kein | | 3 | | | 2500 | 0 | |

EP 1 219 413 B1

## Tabelle 3

| Beisp. | Siegelanspringtemperatur °C | Sglnahtfestigkeit N/15 mm | Sglnahtfestigkeit N/15 mm | Reibung COF | Mittlere Rauigkeit $R_a$ nm | | Messwerte für die Gasströmung s | | Δp | Glanz | | Trü-bung | Wickel-verhalten und Handling | Verarbeitungsverhalten |
|---|---|---|---|---|---|---|---|---|---|---|---|---|---|---|
| | A-Seite gegen A-Seite | A-Seite gegen A-Seite | A-Seite gegen C-Seite | C-Seite gegen C-Seite | A-Seite | C-Seite | A-Seite | C-Seite | | A-Seite | C-Seite | | | |
| B 1 | 100 | 2,0 | 1,3 | 0,40 | 25 | 230 | 1200 | 10 | 0,165 | 140 | 55 | 45 | ++ | ++ |
| B 2 | 98 | 2,7 | 1,5 | 0,40 | 26 | 230 | 1280 | 10 | 0,165 | 140 | 55 | 45 | ++ | ++ |
| B 3 | 95 | 3,0 | 1,8 | 0,40 | 23 | 230 | 1110 | 10 | 0,165 | 130 | 50 | 47 | ++ | ++ |
| B 4 | 85 | 3,3 | 2,0 | 0,40 | 23 | 230 | 1300 | 10 | 0,165 | 130 | 50 | 47 | ++ | ++ |
| B 5 | 85 | 3,3 | 2,0 | 0,40 | 23 | 250 | 1300 | 8 | 0,165 | 130 | 45 | 35 | ++ | ++ |
| VB 1 | 98 | 2,1 | | 0,45 | 10 | 65 | 10000 | 80 | 0,165 | 160 | 170 | 1,5 | - | - |
| VB 2 | 110 | 1,0 | | 0,45 | 65 | 65 | 80 | 80 | 0,165 | 130 | 170 | 2,8 | - | - |
| VB 3 | 100 | 2,0 | | 0,45 | 25 | 37 | 1200 | 150 | 0,165 | 160 | 190 | 1,5 | - | - |
| VB 4 | 115 | 0,97 | | >2 | 70 | 20 | 50 | >5000 | | | | 12 | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

+: mittlere Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

EP 1 219 413 B1

**Patentansprüche**

1.  Einseitig matte, siegelfähige, biaxial orientierte und koextrudierte Polyesterfolie mit mindestens einer Basisschicht (B), die mindestens 80 Gew.-% thermoplastischen Polyester enthält, einer siegelfähigen Deckschicht (A) und einer matten Deckschicht (C), **dadurch gekennzeichnet, dass**

    a) die siegelfähige Deckschicht (A) eine Siegelanspnngtemperatur von weniger als 120 °C, eine Siegelnahtfestigkeit von mindestens 1,0 N/15 mm Folienbreite, einen $R_a$-Wert von höchstens 100 nm und einen Messwert der Oberflächengasströmung im Bereich von 20 bis 4000 s aufweist;
    b) die matte Deckschicht (C) einen Glanz von höchstens 100, einen $R_a$-Wert von mindestens 150 nm und einen Messwert der Oberflächengasströmung im Bereich von 0 bis 80 s aufweist und dass die Deckschicht (C) Partikel mit einem mittleren Partikeldurchmesser, angegeben als ihr $d_{50}$-Wert, von größer/gleich 1 μm, in einer Menge im Bereich von 0,5 bis 20 Gew.-%, bezogen auf das Gesamtgewicht der Deckschicht (C), enthält und
    c) die Trübung kleiner als 50 % ist.

2.  Einseitig matte, siegelfähige Polyesterfolie nach Anspruch 1, **dadurch gekennzeichnet, dass** die siegelfähige Deckschicht (A) einen amorphen Copolyester enthält, der aus Ethylenterephthalat- und Ethylenisophthalat-Einheiten und aus Ethylenglykol-Einheiten aufgebaut ist.

3.  Einseitig matte, siegelfähige Polyesterfolie nach Anspruch 1 oder 2, **dadurch gekennzeichnet, dass** der amorphe Copolyester der siegelfähigen Deckschicht (A) Ethylenterephthalat in einem Anteil von 40 bis 95 Mol-% und Ethylenisophthalat in einem Anteil von 60 bis 5 Mol-% enthält, bevorzugt Ethylenterephthalat in einem Anteil von 50 bis 90 Mol-% und Ethylenisophthalat in einem Anteil von 50 bis 10 Mol-%, besonders bevorzugt Ethylenterephthalat in einem Anteil von 60 bis 85 Mol-% und Ethylenisophthalat in einem Anteil von 40 bis 15 Mol-%.

4.  Einseitig matte, siegelfähige Polyesterfolie nach einem der Ansprüche 1 bis 3, **dadurch gekennzeichnet, dass** die siegelfähige Deckschicht (A) eine Dicke im Bereich von 0,2 bis 3 μm besitzt.

5.  Einseitig matte, siegelfähige Polyesterfolien nach einem der Ansprüche 1 bis 4, **dadurch gekennzeichnet, dass** die siegelfähige Deckschicht (A) Antiblockmittel in einer Menge im Bereich von 0,01 bis 1 Gew.-%, bevorzugt von 0,015 bis 0,08 Gew.-%, besonders bevorzugt von 0,02 bis 0,08 Gew.-%, enthält.

6.  Einseitig matte, siegelfähige Polyesterfolie nach einem der Ansprüche 1 bis 5, **dadurch gekennzeichnet, dass** der Reibungskoeffizient der siegelfähigen Deckschicht (A) gegen sich selbst kleiner/gleich 1,0 ist, bevorzugt kleiner/gleich 0,8.

7.  Einseitig matte, siegelfähige Polyesterfolie nach einem der Ansprüche 1 bis 6, **dadurch gekennzeichnet, dass** die Deckschicht (C) Partikel mit einem mittleren Partikeldurchmesser, angegeben als ihr $d_{50}$-Wert, im Bereich von 1,5 bis 10 μm in einer Menge im Bereich von 1,0 bis 18 Gew.-%, bevorzugt von 1,5 bis 16 Gew.-%, bezogen auf das Gesamtgewicht der Deckschicht (C), enthält.

8.  Einseitig matte, siegelfähige Folie nach einem der Ansprüche 1 bis 7, **dadurch gekennzeichnet, dass** die Deckschicht (C) neben Polyethylenterephthalat-Homopolymer oder Polyethylenterephthalat Copolymer eine zusätzliche polymere Komponente I enthält, die aus dem Kondensationsprodukt der folgenden Monomeren bzw. deren zur Bildung von Polyestern befähigten Derivaten besteht:

    a) 40 bis 99 Mol-% Isophthalsäure;
    b) 0 bis 60 Mol-% wenigstens einer aliphatischen Dicarbonsäure mit der Formel $HOOC(CH_2)_nCOOH$, wobei n im Bereich von 1 bis 11 liegt;
    c) 1 bis 15 Mol-% wenigstens eines Sulfomonomeren enthaltend eine Alkalimetallsulfonatgruppe an dem aromatischen Teil einer Dicarbonsäure,
    d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

    wobei die Prozentangaben jeweils bezogen sind auf die Gesamtmenge der die Komponente I bildenden Monomeren.

9. Verfahren zum Herstellen einer einseitig matten, siegelfähigen Folie nach einem der Ansprüche 1 bis 8 durch Koextrusion, bei der die den einzelnen Schichten (A), (B) und (C) der Folie entsprechenden Polymeren bzw. Polymermischungen in einem Extruder komprimiert und verflüssigt werden, wobei die gegebenenfalls als Zusätze vorgesehenen Additive bereits im Polymer bzw. in der Polymermischung enthalten sein können, bei der die Schmelzen dann gleichzeitig durch eine Flachdüse gepresst werden, die ausgepresste mehrschichtige Schmelze dann auf einer oder mehreren Abzugswalzen abgezogen wird, wobei die Schmelze abkühlt und sich zu einer Vorfolie verfestigt, und bei der die Vorfolie anschließend biaxial gestreckt, die biaxial gestreckte Folie thermofixiert und gegebenenfalls an der zur Behandlung vorgesehenen Oberflächenschicht noch corona- oder flammbehandelt und danach aufgewickelt wird, **dadurch gekennzeichnet, dass** die Längsstreckung bei einer Temperatur im Bereich von 80 bis 130 °C und die Querstreckung im Bereich von 90 bis 150 °C durchgeführt wird und dass das Längsstreckverhältnis in einem Bereich von 2,5:1 bis 6:1, bevorzugt von 3:1 bis 5,5:1, eingestellt wird und das Querstreckverhältnis in einem Bereich von 3,0:1 bis 5,0:1, bevorzugt von 3,5:1 bis 4,5:1.

10. Verfahren nach Anspruch 9, **dadurch gekennzeichnet, dass** die biaxial gestreckte Folie zur Thermofixierung über eine Zeitdauer von 0,1 bis 10 s bei einer Temperatur im Bereich von 150 bis 250 °C gehalten und anschließend aufgewickelt wird.

11. Verfahren nach Anspruch 9 oder 10, **dadurch gekennzeichnet, dass** eine oder beide Oberfläche/n der Folie nach dem Thermofixieren noch corona- oder flammbehandelt wird/werden, wobei die Behandlungsintensität so eingestellt wird, dass sich eine Oberflächenspannung der behandelten Oberfläche im Bereich von über 45 mN/m ergibt.

12. Verfahren nach einem der Ansprüche 9 bis 11, **dadurch gekennzeichnet, dass** bei der Herstellung der Folie anfallendes Verschnittmaterial als Regenerat in einer Menge im Bereich von 10 bis 60 Gew.-%, bezogen auf das Gesamtgewicht der Folie, wieder der Extrusion zugeführt wird.

13. Verwendung einer einseitig matten, siegelfähigen Folie nach einem der Ansprüche 1 bis 8 für den Einsatz in der flexiblen Verpackung, insbesondere auf schnelllaufenden Verpackungsmaschinen.

**Claims**

1. A sealable, biaxially oriented and coextruded polyester film with one matt side and with at least one base layer (B) which comprises at least 80 % by weight of thermoplastic polyester, and with a sealable outer layer (A), and with a matt outer layer (C),

   wherein

   a) the sealable outer layer (A) has a minimum sealing temperature below 120 °C, a seal seam strength of at least 1.0 N/15 mm of film width, an $R_a$ value of at most 100 nm, and a value measured for surface gas flow in the range from 20 to 4000 s;
   b) the matt outer layer (C) has a gloss of at most 100, an $R_a$ value of at least 150 nm, and a value measured for surface gas flow in the range from 0 to 80 s, and the outer layer (C) comprises an amount in the range from 0.5 to 20 % by weight, based on the total weight of the outer layer (C), of particles with an average particle diameter, stated as their $d_{50}$ value, greater than or equal to 1 µm,
   c) the haze is smaller than 50 %.

2. The sealable polyester film with one matt side as claimed in claim 1, wherein the sealable outer layer (A) comprises an amorphous copolyester whose structure is composed of ethylene terephthalate units and ethylene isophthalate units and of ethylene glycol units.

3. The sealable polyester film with one matt side as claimed in claim 1 or 2, wherein the amorphous copolyester of the sealable outer layer (A) comprises a proportion of from 40 to 95 mol% of ethylene terephthalate and a proportion of from 60 to 5 mol% of ethylene isophthalate, preferably a proportion of from 50 to 90 mol% of ethylene terephthalate and a proportion of from 50 to 10 mol% of ethylene isophthalate, particularly preferably a proportion of from 60 to 85 mol% of ethylene terephthalate and a proportion of from 40 to 15 mol% of ethylene isophthalate.

4. The sealable polyester film with one matt side as claimed in any of claims 1 to 3, wherein the sealable outer layer (A) has a thickness in the range from 0.2 to 3 µm.

5. The sealable polyester film with one matt side as claimed in any of claims 1 to 4, wherein the sealable outer layer (A) comprises an amount in the range from 0.01 to 1 % by weight, preferably from 0.015 to 0.08 % by weight, particularly preferably from 0.02 to 0.08 % by weight, of antiblocking agent.

6. The sealable polyester film with one matt side as claimed in any of claims 1 to 5, wherein the coefficient of friction of the sealable outer layer (A) with respect to itself is smaller than or equal to 1.0, preferably smaller than or equal to 0.8.

7. The sealable polyester film with one matt side as claimed in any of claims 1 to 6, wherein the outer layer (C) comprises an amount in the range from 1.0 to 18 % by weight, preferably from 1.5 to 16 % by weight, based on the total weight of the outer layer (C), of particles with an average particle diameter, stated as their $d_{50}$ value, in the range from 1.5 to 10 $\mu$m.

8. The sealable film with one matt side as claimed in any of claims 1 to 7, wherein the outer layer (C) comprises, besides polyethylene terephthalate homopolymer or polyethylene terephthalate copolymer, an additional polymeric component I which is composed of the condensate of the following monomers or of their derivatives capable of forming polyesters:

   a) from 40 to 99 mol% of isophthalic acid;
   b) from 0 to 60 mol% of at least one aliphatic dicarboxylic acid having the formula $HOOC(CH_2)_nCOOH$, where n is in the range from 1 to 11;
   c) from 1 to 15 mol% of at least one sulfomonomer containing an alkali metal sulfonate group on the aromatic moiety of a dicarboxylic acid;
   d) the stoichiometric amount of a copolymerizable aliphatic or cycloaliphatic glycol having from 2 to 11 carbon atoms needed to form 100 mol% of condensate;

   where each of the percentages is based on the total amount of the monomers forming component I.

9. A process for producing a sealable film with one matt side as claimed in any of claims 1 to 8 via coextrusion, in which the polymers or polymer mixtures corresponding to the individual layers (A), (B), and (C) of the film are compressed and plastified in an extruder, where any additives added may be present in the polymer or polymer mixture at this stage, and in which the melts are then simultaneously extruded through a slot die, the extruded multilayer melt is then drawn off on one or more take-off rolls, whereupon the melt cools and solidifies to give a prefilm, and in which the prefilm is then biaxially stretched, the biaxially stretched film is heat-set and, where appropriate, also corona-treated or flame-treated on the surface layer intended for treatment, and is then wound up, which comprises carrying out the longitudinal stretching at a temperature in the range from 80 to 130 °C and the transverse stretching in the range from 90 to 150 °C, and setting a longitudinal stretching ratio in the range from 2.5:1 to 6:1, preferably from 3:1 to 5.5:1, and a transverse stretching ratio in the range from 3.0:1 to 5.0:1, preferably from 3.5:1 to 4.5:1.

10. The process as claimed in claim 9, wherein the biaxially stretched film is kept at a temperature in the range from 150 to 250 °C for a period of from 0.1 to 10 s for heat-setting, and is then wound up.

11. The process as claimed in claim 9 or 10, wherein one or both surfaces of the film are also corona- or flame-treated after heat-setting, the intensity of treatment being adjusted so as to give a surface tension in the range above 45 mN/m for the treated surface.

12. The process as claimed in any of claims 9 to 11, wherein an amount in the range from 10 to 60 % by weight, based on the total weight of the film, of chopped material produced during the production of the film is reintroduced as regrind into the extrusion process.

13. The use of a sealable film with one matt side as claimed in any of claims 1 to 8 for flexible packaging, in particular on high-speed packaging machinery.

**Revendications**

1. Film de polyester mat sur une face, soudable, orienté biaxialement et coextrudé avec au moins une couche de base (B) qui contient au moins 80 % en poids de polyester thermoplastique, une couche de couverture soudable (A) et une couche de couverture mate (C), **caractérisé en ce que**

a) la couche de couverture soudable (A) présente une température de début de soudage de moins de 120 °C, une résistance du cordon de soudure d'au moins 1,0 N/15 mm de largeur de feuille, une valeur $R_a$ d'au plus 100 nm et une valeur de mesure de l'écoulement superficiel de gaz dans la gamme de 20 à 4000 s ;
b) la couche de couverture mate (C) présente une brillance d'au plus 100, une valeur $R_a$ d'au moins 150 nm et une valeur de mesure de l'écoulement superficiel de gaz dans la gamme de 0 à 80 s, et **en ce que** la couche de couverture (C) contient des particules d'un diamètre de particule moyen, spécifié comme sa valeur $d_{50}$, supérieur ou égal à 1 μm, en une quantité dans la gamme de 0,5 à 20 % en poids, rapporté au poids total de la couche de couverture (C) et
c) la turbidité est inférieure à 50 %.

2. Film de polyester mat sur une face, soudable, selon la revendication 1, **caractérisé en ce que** la couche de couverture soudable (A) contient un copolyester amorphe, qui est constitué d'unités de téréphtalate d'éthylène et d'isophtalate d'éthylène, et d'unités d'éthylène glycol.

3. Film de polyester mat sur une face, soudable, selon la revendication 1 ou 2, **caractérisé en ce que** le copolyester de la couche de couverture soudable (A) contient du téréphtalate d'éthylène en une proportion de 40 à 95 % en mole et de l'isophtalate d'éthylène en une proportion de 60 à 5 % en mole, de préférence du téréphtalate d'éthylène en une proportion de 50 à 90 % en mole et de l'isophtalate d'éthylène en une proportion de 50 à 10 % en mole, et encore plus préférablement du téréphtalate d'éthylène en une proportion de 60 à 85 % en mole et de l'isophtalate d'éthylène en une proportion de 40 à 15 % en mole.

4. Film de polyester mat sur une face, soudable, selon l'une des revendications 1 à 3, **caractérisé en ce que** la couche de couverture soudable (A) possède une épaisseur dans la gamme de 0,2 à 3 μm.

5. Film de polyester mat sur une face, soudable, selon l'une des revendications 1 à 4, **caractérisé en ce que** la couche de couverture soudable (A) contient des agents antibloc en une quantité dans la gamme de 0,01 à 1 % en poids, de préférence de 0,015 à 0,08 % en poids et encore plus préférablement de 0,02 à 0,08 % en poids.

6. Film de polyester mat sur une face, soudable, selon l'une des revendications 1 à 5, **caractérisé en ce que** le coefficient de frottement de la couche de couverture soudable (A) par rapport à elle-même est inférieur ou égal à 1,0, de préférence inférieur ou égal à 0,8.

7. Film de polyester mat sur une face, soudable, selon l'une des revendications 1 à 6, **caractérisé en ce que** la couche de couverture (C) contient des particules d'un diamètre moyen de particule, spécifié comme leur valeur d50, dans l'intervalle de 1,5 à 10 μm en une quantité dans la gamme de 1,0 à 18 % en poids, de préférence de 1,5 à 16 % en poids, rapporté au poids total de la couche de couverture (C).

8. Film mat sur une face, soudable, selon l'une des revendications 1 à 7, **caractérisé en ce que** la couche de couverture (C) contient, outre l'homopolymère de poly(téréphtalate d'éthylène) ou le copolymère de poly(téréphtalate d'éthylène), un composant polymère I supplémentaire, qui consiste en le produit de condensation des monomères suivants, respectivement de leurs dérivés aptes à la formation de polyesters :

a) 40 à 99 % en mole d'acide isophtalique ;
b) 0 à 60 % en mole d'au moins un acide dicarboxylique aliphatique de la formule $HOOC(CH_2)_nCOOH$, dans laquelle n est compris dans la gamme de 1 à 11 ;
c) 1 à 15 % en mole d'au moins un sulfomonomère, contenant un groupe sulfonate de métal alcalin sur la partie aromatique d'un acide dicarboxylique ;
d) la quantité stoechiométrique, nécessaire pour la formation d'un condensat à 100 % en mole, d'un glycol aliphatique ou cycloaliphatique copolymérisable avec 2 à 11 atomes de carbone ;

sachant que les données en pour-cent sont chaque fois rapportées à la quantité totale des monomères formant le composant I.

9. Procédé pour la fabrication d'un film mat sur une face, soudable, selon l'une des revendications 1 à 8, par co-extrusion lors de laquelle les polymères correspondant aux différentes couches (A), (B), (C) du film sont comprimés et liquéfiés dans une extrudeuse, sachant que les additifs prévus le cas échéant comme suppléments peuvent déjà être contenus dans le polymère, respectivement dans le mélange de polymères, lors de laquelle les matières fondues sont ensuite forcées en même temps à travers une filière plate, la matière fondue multicouche extrudée étant ensuite extraite sur un ou plusieurs rouleaux délivreurs, lors de quoi la matière fondue se refroidit et se solidifie pour donner un pré-film, et lors de laquelle le pré-film est ensuite étiré biaxialement, le film étiré biaxialement étant fixé thermiquement et, le cas échéant, étant encore traité par corona ou par flamme sur la couche superficielle prévue pour le traitement et étant ensuite enroulé, **caractérisé en ce que** l'étirage longitudinal est effectué à une température dans la gamme de 80 à 130 °C et l'étirage transversal à une température dans la gamme de 90 à 150 °C, et **en ce que** le rapport d'étirement longitudinal est réglé dans une gamme de 2,5 : 1 à 6 : 1, de préférence de 3 : 1 à 5,5 : 1, et le rapport d'étirement transversal dans une gamme de 3,0 : 1 à 5,0 : 1, de préférence de 3,5 : 1 à 4,5 : 1.

10. Procédé selon la revendication 9, **caractérisé en ce que** le film étiré biaxialement est maintenu pour la fixation thermique pendant une durée de 0,1 à 10 s à une température dans la gamme de 150 à 250 °C et qu'il est ensuite enroulé.

11. Procédé selon la revendication 9 ou 10, **caractérisé en ce qu'**après la fixation thermique, une ou les deux surfaces du film sont encore traitées par corona ou par flamme, sachant que l'intensité du traitement est réglée de telle sorte qu'il en résulte une tension superficielle de la surface traitée dans le domaine de plus de 45 mN/m.

12. Procédé selon l'une des revendications 9 à 11, **caractérisé en ce que** les chutes de matière coupées produites lors de la fabrication du film sont réacheminées à l'extrusion comme régénéré en une quantité dans la gamme de 10 à 60 % en poids, rapporté au poids total du film.

13. Utilisation d'un film mat sur une face, soudable, selon l'une des revendications 1 à 8, pour la mise en oeuvre dans l'emballage flexible, en particulier sur des machines d'emballage à grande vitesse.